# EUROPEAN PATENT APPLICATION

(11) **EP 1 657 121 A1**
(43) Date of publication of application: **17.05.2006**
(21) Application number: 05386006.0
(22) Date of filing: 05.04.2005
(51) Int. Cl.: B60R 21/12

(54) **Security partition for passenger cars**

(30) Priority: 16.11.2004 GR 2004100438
(71) Applicant: Rampetas, Athanasios, 10447 Votanikos, Athens (GR)
(72) Inventor: Rampetas, Athanasios, 10447 Votanikos, Athens (GR)

(57) **Abstract**

The security partition consists of the main body made of sturdy transparent material, of seven pieces, bonded, with special inclinations (acute - obtuse angles) (1), metal security connectors (2), two upper side metallic fixing bases (3), one opening for money transactions with its metal base (4), two bronze handles (5), two lower side metal fixing bases (8), pieces of spongy protective material (6,7,11) clamps (9), bolts (18), nuts (19), washers (21) and horizontal oval openings on the upper and lower metal bases fixing the partition onto the carriage (20).

## Description

The invention concerns a security partition, to be installed in passenger cars of public use - TAXIS and is meant to protect the life and bodily integrity of their drivers.

Security partitions, are known to only a few countries outside Greece. Such partitions are to be found in large - as to length and width, that is wide and tall as regards the floor and the roof - cars. These partitions fit fully to the sides, right and left, inside the carriage, since they have been manufactured, originally, at the car plant, specifically for this purpose. The partitions also fit fully onto the floor ― since it is flat ― and the roof of the car. They are glued and well fixed on the carriage and are equipped with an opening for money transactions.

"The drawback" of these partitions is the fact that they are manufactured together with the cars at the plant, concern cars of big dimensions (length-width), with special dimensions of interior space, therefore they are not manufactured independently so they might be installed in other cars.

The advantage OF THE INVENTION is that the said security partition is manufactured self-contained, is easily installed and is fully applicable in ALL passenger public cars-TAXIS circulating in Greece, and in other countries, irrelevantly of the dimensions and special arrangement of their interior space and without bringing about any modification to the car carriage.

According to the invention, this is achieved with the shape, the form, the dimensions and the special inclinations (acute - obtuse angles), that have been allowed to the security partition, which enable it to fully abut on the backs of the two front seats of the car, as well as on their external sides, left and right, allowing clearances between the partition sides and its points of fixation on the car carriage (middle vertical columns) left and right.

The dimensions given at the height level of the partition allow the existence of a space between the upper part of the partition and the car roof, as well at its lower part with the car floor.

The security partition according to the present invention, presents many advantages, and in particular:
1. It is installed easily and is fully applicable on all car types, passenger of public use-TAXIS.
2. Its installation is effected ABSOLUTELY WITHOUT ANY INTERVENTION or MODIFICATION on the car body.
3. It takes up minimal space inside the cabin, offering further the possibility of easy adjustment back-forth.
4. The particularities of its manufacture, the extended resistance of the manufacturing material and the mode of its installation, are the factors that render any access to the driver ABSOLUTELY IMPOSSIBLE, therefore barring any criminal act that would result to the injury or death of the driver.
5. After its installation no problem WHATSOEVER is created either to the driver or the passengers, to the car air conditioning (cooling - heating), the natural ventilation of the cabin, the conversation between the passengers and the driver and the money transaction between them, and
6. It is of low manufacturing and installation cost, that renders it accessible to all professional drivers of passenger public cars-TAXIS.

Drawing **1** shows a view of the security partition of the present invention, as seen from inside.

Drawing **2** shows a view of the partition, as seen from its right outer side.

Drawing **3** shows a view of the partition, as seen from its left outer side.

Drawing **4** shows a view of the partition, as seen from the back outside.

Drawing **5** shows the money transactions opening and its reinforcing metal support.

Drawing **6** shows the lower side base of its fixation, together with the clamp, bolt, nut, washers.

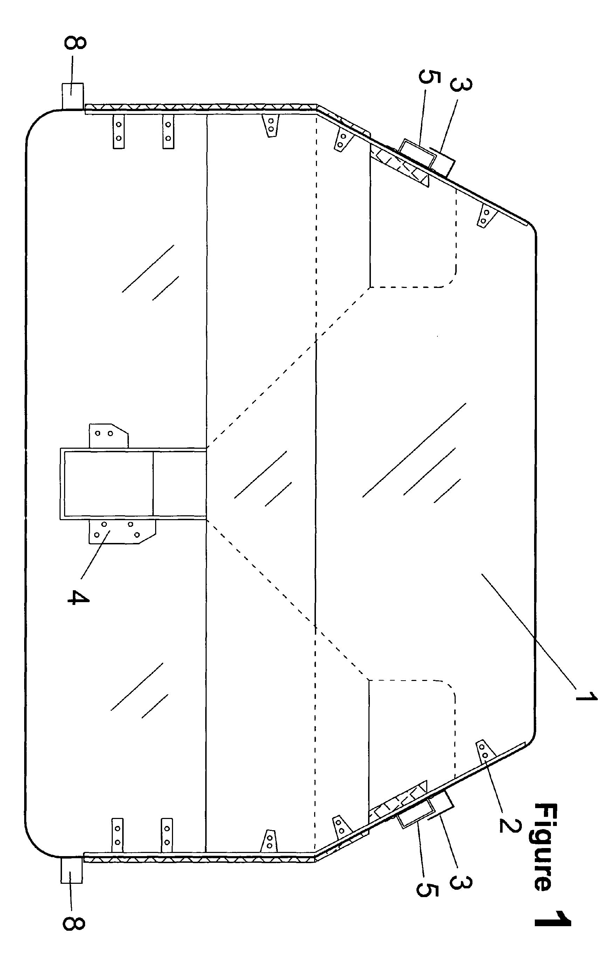

Drawing **1** shows the main body of the security partition (1). Ten security connectors (2). Two upper side fixing bases, left-right (3). One opening for money transactions with its reinforcement metal base (4). Two handles left-right (5). Two lower side bases for its fixing left-right (8).

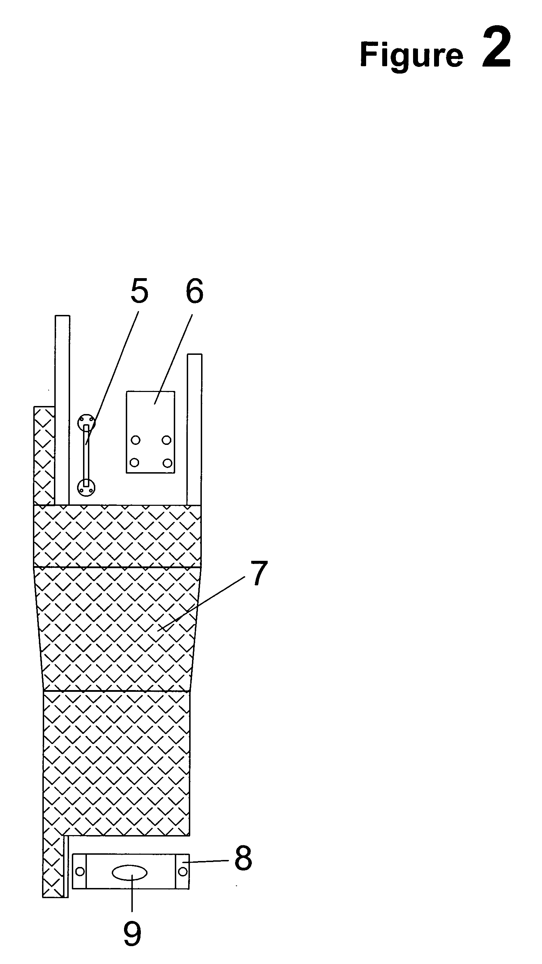

Drawing **2** shows the right handle (5).

A piece of spongy protective material (6).

A piece of spongy protective material (7).

A clamp (9), at the right lower side base for its fixing (8).

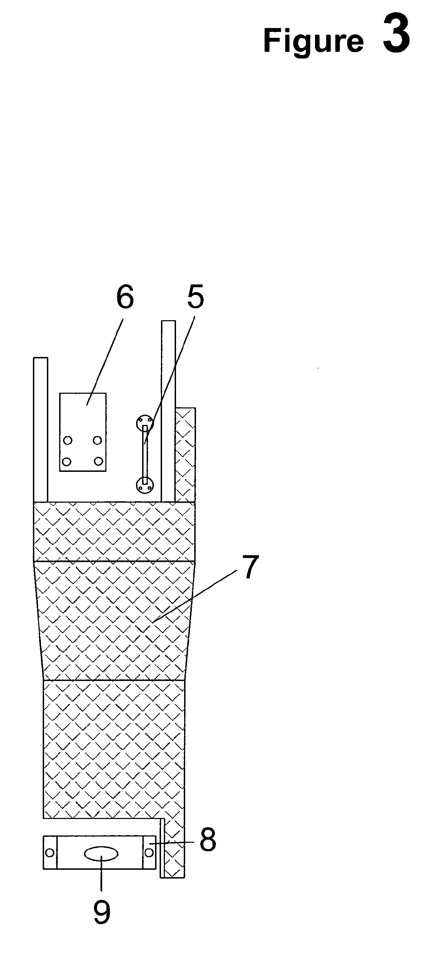

Drawing **3** shows the left handle (5). The spongy protective material (6). The spongy material (7). The left clamp (9). The left lower side base for its fixing (8).

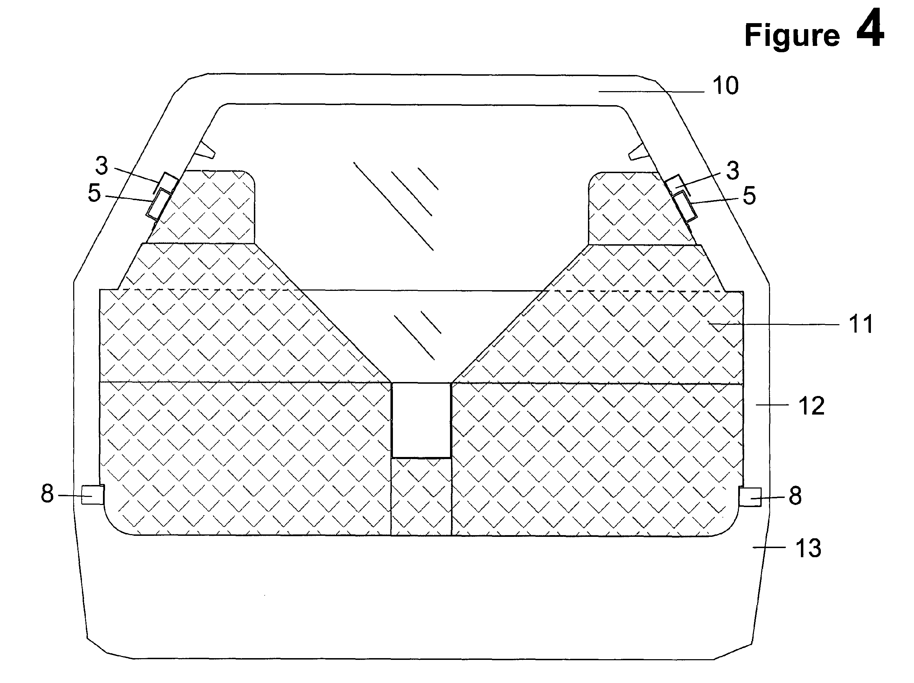

Drawing **4** shows the two upper side bases for its fixing (3). The two handles (5). The two lower side bases for its fixing (8). Two pieces of spongy protective material (11). The clearance between the partition and the car roof (10). The clearance between the fixing point of the partition and the carriage body (12). The clearance between the floor and the partition (13).

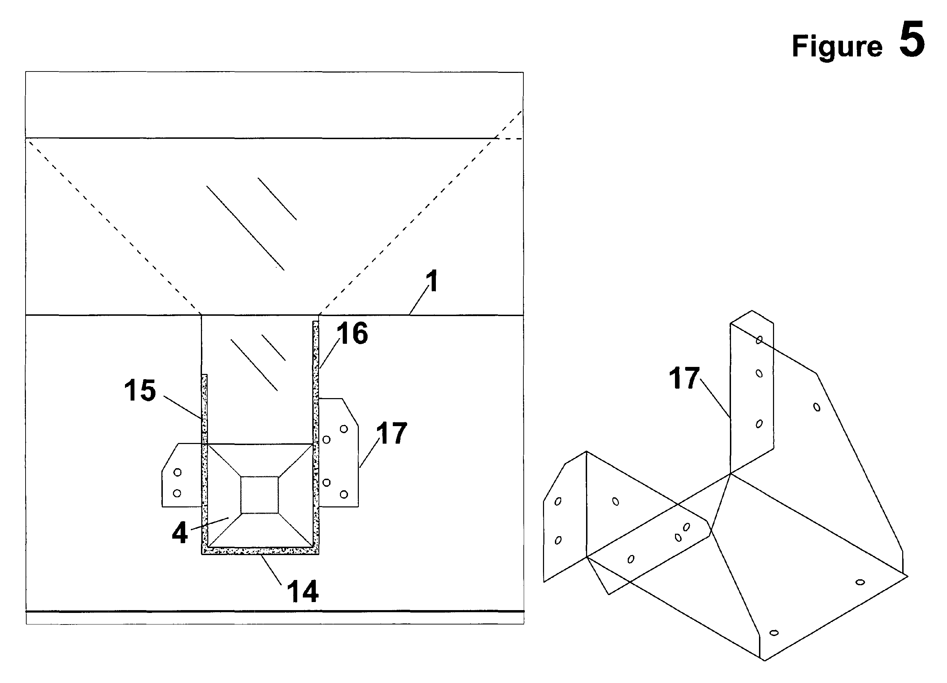

Drawing **5** shows the money transactions opening (4), which consists of 3 pcs of various dimensions, the base (14), its right side towards the co-driver (15), its left side towards the driver (16) and also the metal reinforcing base (17).

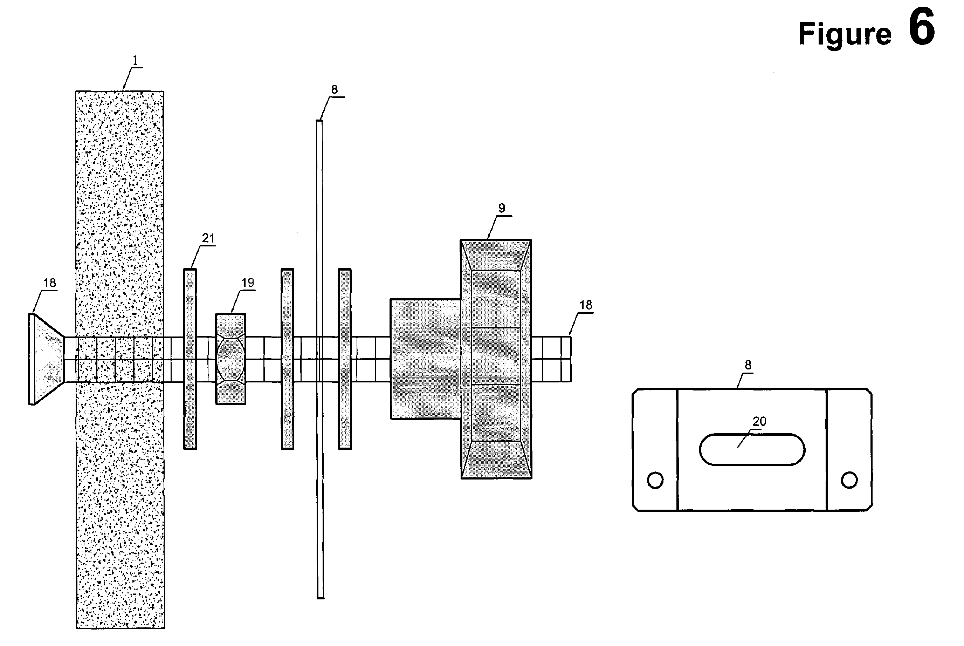

Drawing **6** shows the lower side base for fixation of the partition (8), the clamp (9), the bolt (18), the nut (19), the horizontal opening (oval boring) on the surface of the lower base for fixation (20) and 3 washers (21).

This security partition, consists of:

The main body (1) is made of sturdy material, acrylic, transparent EXTRUDED (PLEXIGLASS), POLYCARBONATED SOLID, or BULLET-PROOF GLASS, irrelevantly of thickness (thickness of every transparent material is determined according to the construction specifications for its strength), imported, of seven pieces in various dimensions to which, apart from the special dimensions, have been allowed the necessary gradients which give the special inclinations (acute - obtuse angles) of the partition, adhered (glued) with special glue.

Ten metallic security connectors INOX (2), in the shape of right angle, one side of which screwed separately on each one of the three bigger pieces of the construction material and the other on each of the four smaller pieces separately, which are described as sides of the partition, providing bonding of all the pieces, further to the glue.

Two upper side fixing bases of the partition, metallic, INOX right and left (3), which offer full advantages and outfit like the two lower side fixing bases, right and left, for fixation of the partition on the carriage (8), one side of which is screwed onto the side of the partition and the other is screwed onto the carriage body.

One opening for money transactions (4) with its metallic base, INOX (17), which opening consists of three pieces of transparent construction material of different dimensions, bonded (glued) onto each other with special glue and the entire money transactions opening is glued on the main body of the partition.

The metal reinforcing basis INOX (17) secures installation of the transactions opening on the main body of the partition, as follows: One of its section is screwed on the main body of the partition and its other section is screwed on the already glued transactions opening on the main body of the partition, securing thus the connection of the transactions opening on the main body of the partition, additionally to the glue.

Two bronze handles (5), screwed onto the two sides of the partition - right and left - externally, a little ahead the back side of the partition, towards the front part of the car, for security reasons (in the case of abrupt braking or head-on collision) so that the passengers do not hit on them. These handles have been fixed onto the partition to facilitate the passengers getting on and off the car.

Two lower side fixing bases, metallic INOX, right and left (8), one side of which is screwed onto the carriage body, and the other side (surface) which is equipped with a horizontal opening (20) (drawing 6) (oval opening) is connected to the lower side portion of the partition with the aid of a clamp (9). The combination of clamp (9) with the horizontal opening (oval) of the lower base (8) is the system with which we adjust the partition, front-back, i.e.:

One bolt (18) (drawing 6), placed and screwed securely with a tool at the lower side part of the partition, with nut (19) (drawing 6) that goes through permanently at the lower side base (8) via the horizontal opening (20) (drawing 6) of the basis (8) and after having adjusted the partition, front-back, to an acceptable position for the driver and the passengers, the partition is fixed on its support bases (8) by tightening the clamps (9), right-left.

Two pieces of spongy protective material (6), which are glued on the inside of the two sides of the partition right and left, at the level of the head of the driver and the co-driver, for their protection in case of a side collision of the car.

Two more pieces of spongy protective material (7), glued on the outside of the two sides of the partition, right and left.

Two bronze clamps, coated with bakelite material, right and left (9), which stabilize the partition on the two lower side fixing bases of the partition (8) after its adjustment.

Two more pieces of spongy protective material (11), glued on the outside surface (back) right and left of the partition to protect the passengers in the event of a head-on collision or sudden braking of the vehicle.

## Claims

1. The security partition in question consists:
Of the main body (1), manufactured of sturdy material, acrylic, transparent, EXTRUDED (PLEXIGLASS), POLYCARBONATED SOLID, or of BULLET-PROOF GLASS, irrelevantly of thickness (thickness of every transparent material is determined according to the construction specifications for its strength), of seven pieces of different dimensions, metallic secure connectors screwed onto the partition (2), two upper side bases, metallic, fixing the upper part of the partition onto the carriage body right and left (3), an opening for money transactions with its metal base, fixed on the main body of the partition (4), two bronze handles screwed onto the partition right and left (5), two lower side metal bases, fixing the lower part of the partition on the carriage body (8), pieces of spongy protective material, glued onto the partition (6, 7, 11) and two clamps (9), placed on the two lower side bases of the partition right and left, with the aid of two bolts (18), two nuts (19) and three washers (21) (drawing 6) so that it comprises a compact construction applicable and functional in every make of passenger cars for public use-TAXIS, irrelevantly of dimensions and special arrangement of internal space ― actually without any intervention - modification of their carriage.

2. The security partition, according to claim 1 is **characterized by** the fact that:
the opening for money transactions with its metal reinforcing base (4) is mounted on the inside of the partition towards the driver (drawing 1) so that it does not inconvenience the passengers of the back seat and it does not constitute danger for minor injuries of the passengers.
The opening of money transactions consists of three pieces of different dimensions, transparent material, the base (14), its right side towards the co-driver (15) and its left side towards the driver (16) (drawing 5).
The construction and installation of the above opening onto the partition, has been made in such a way that it renders it IMPOSSIBLE to access any pointed instrument to the driver, no matter how long the blade is if it concerns a knife, or other long, thin, pointed instrument, because:
the total height of its two sides, which is at the point of its attachment (fixing) on the main body of the partition, is HIGHER than the height of the opening onto the partition (drawing 4). Particularly, its left side (16) (drawing 5) towards the driver, is even HIGHER, at such a level that if any passenger sitting at the back attempts to pass any pointed instrument diagonally through the lower right part of the opening on the partition with direction to its upper left part (drawing 4), no matter how hard he tries he will fail.

3. The security partition according to claims 1 and 2, is **characterized by** the fact that:
the total pieces (14-15-16) (drawing 5) of which the opening for money transactions consists, apart from the fact that they are donded (glued) with special glue, they are glued on the main body of the partition. This integrated bonding is SECURED by the reinforcing metal base (17) (drawing 5) because:
One of its sides is screwed ON ALL three pieces of the opening (14-15-16) (drawing 5) and its other side is screwed onto the main body of the partition (drawing 1, point 4).

4. The security partition according to claims 1-3 is **characterized by** the fact that:
at its lower side bases of fixing, left and right, (8) as well as at the two upper side bases, left and right (3) (drawings 1 and 4) which are equipped with a horizontal opening (20), clamp (9), bolt (18), nut (19) and washers (21) (drawing 6), one side of which is screwed onto the carriage and their other side (their surface) which has the horizontal opening (20) (drawing 6) (oval opening), is connected to the lower side part of the partition with the aid of the clamp (9) (drawing 2) the combination of the clamp (9) with the horizontal opening (20) (drawing 6) of the lower side basis (8) is the system through which we adjust the partition front-back, i.e.:
A bolt (18) (drawing 6) positioned and tightened firmly with a tool at the lower side portion of the partition with nut (19) (drawing 6), goes through the lower side bases (8) via the horizontal opening (20) (drawing 6) of the lower bases (8), permanently and after adjusting the partition to and fro, in a desirable position for the driver and the passengers, we stabilize the partition onto the lower bases of its support (8) tightening the clamps (9) right and left.
Forcible movement of the partition towards the passengers, to create a space between the left side of the partition and the left vertical middle column of the car, a space through which the driver could receive an attack BECOMES IMPOSSIBLE for the passengers at the back, although they have access to the adjustment system of the partition, because: the lower support bases of the partition (8) are screwed with bolts and securely tightened with a tool onto the carriage, as well as the bolt (18) (drawing 6) on which bolt the clamp (9) tightens. The clamp is also placed and securely tightened with a tool onto the partition with the aid of the nut (19) (drawing 6).

5. The security partition according to the claims 1-4 is **characterized by** the fact that:
the dimensions that have been allowed to the said partition and the way it is positioned inside the car, are what gives it the possibility TO CREATE INTERMEDIATE SPACES between the two vertical middle columns of the car (12) (drawing 4) and the upper part of the partition with the roof (10) (drawing 4), rendering thus the communication between the driver and the passengers EASY, without the need for use of special microphones, also full effect of the air-conditioning of the passengers at the back and the natural ventilation of the cabin.
The height of the partition has been calculated in a way that following its installation into the car, to create INTERMEDIATE SPACE between the lower part of the partition and the floor of the car (13) (drawing 4), a space which is ADEQUATE so that the passengers at the back may be able to stretch their legs EASILY, down the space under the front seats of the car, making thus their travel COMFORTABLE.
After installation of the partition in the car cabin, through the INTERMEDIATE SPACES (12-10-13) (drawing 4) created, the driver runs NO RISK from the passengers at the back.

6. The security partition according to the claims 1-5 is **characterized by** the fact that:
in this partition we have given SPECIAL GRADIENTS which give it the possibility to FULLY ABUT the backs of the front seats, and as a result it occupies MINIMAL SPACE in the car cabin, i.e. ONLY the thickness of the material it is constructed of.

7. The security partition, according to claims 1-6 is **characterized by** the fact that:
sturdiness and the thickness of its construction material, also its entire construction, combined with the mode of its installation inside the car, give it the advantage of non needing ANY REINFORCEMENT or RIBS.

8. The security partition, according to the claims 1-7 is **characterized by** the fact that:
the partition in question can be installed in a car either at the plant or through retrofit.
